Europäisches Patentamt

European Patent Office

Office européen des brevets

(19)

(11) Veröffentlichungsnummer: **0 049 527**

**A1**

(12) **EUROPÄISCHE PATENTANMELDUNG**

(21) Anmeldenummer: 81108027.4

(22) Anmeldetag: 07.10.81

(51) Int. Cl.³: **F 16 D 65/847**

(30) Priorität: 07.10.80 DE 3037813

(43) Veröffentlichungstag der Anmeldung:
14.04.82 Patentblatt 82/15

(84) Benannte Vertragsstaaten:
DE FR GB IT SE

(71) Anmelder: Knorr-Bremse GmbH
Moosacher Strasse 80
D-8000 München 40(DE)

(72) Erfinder: Bieker, Dieter
Fichtenstrasse 86
D-5630 Remscheid(DE)

(72) Erfinder: Monstadt, Ernst
Nettelbeckstrasse 82
D-4630 Bochum(DE)

(54) **Kühlluftführung für eine innerhalb eines Kraftfahrzeugrades angeordnete Scheibenbremse.**

(57) Kühlluftführung für eine radial innerhalb einer Radfelge (5) eines Kraftfahrzeugrades angeordnete Scheibenbremse (12), deren Bremsscheibe (7) radiale Kühlluftkanäle (8) aufweist. Die Bremsscheibe (7) weist einen einseitig auskragenden, rohrartigen Tragansatz (6) zur Befestigung am Nabenbereich (1) des Fahrzeugrades auf. Zusätzlich zur bisher üblichen Kühlluftführung durch einen durch Adaptionsteile (17, 18) der Scheibenbremse (12) beengten Durchströmungsquerschnitt (19) entsprechend Pfeil (23) kann durch die Durchbrechungen (21 und 20) eine große Kühlluftmenge ungedrosselt zum Raum (9) gelangen, so daß am radial inneren Eingang der Kühlluftkanäle (8) stets eine ausreichend große Kühlluftmenge zur Verfügung steht. Beim Druchströmen des Raumes (16) erfolgt zusätzlich eine Kühlung der der Radschüssel (4) zugewandten Seite der Scheibenbremse (12).

Fig. 1

EP 0 049 527 A1

Knorr-Bremse GmbH

München, 1.10.1980

Moosacher Straße 80

TP-so

8000 München 40

- 1634 -

Kühlluftführung für eine innerhalb
eines Kraftfahrzeugrades angeordnete
Scheibenbremse

Die Erfindung bezieht sich auf eine Kühlluftführung für eine radial innerhalb einer Radfelge eines Kraftfahrzeugrades angeordnete Scheibenbremse, deren von radialen Kühlluftkanälen durchsetzte Bremsscheibe am radial inneren Randbereich einseitig einen auskragenden, im wesentlichen zylindrischen, rohrartigen Tragansatz aufweist, dessen freies Ende mit dem Fahrzeugrad zumindest nahe dessen Nabenbereich verbunden ist, wobei sich zwischen der Scheibenbremse und der Radschüssel radial außerhalb des Tragansatzes ein mit der Außenluft kommunizierender, erster Raum befindet und wobei die radial inneren Mündungen der Kühlluftkanäle der Bremsscheibe mit einem vom Tragflansch umschlossenen, zweiten Raum kommunizieren.

In ihrer Anordnung innerhalb eines Kraftfahrzeugrades und in ihrem Aufbau den vorstehend genannten Merkmalen entsprechende Scheibenbremsen sind bereits bekannt, beispielsweise aus der DE-PS 1 580 144 - 63c 51/02. Bei derartigen Anordnungen ist die Kühlluftführung für die Scheibenbremse oftmals behindert, da die radial inneren

2

Eintrittsöffnungen der Lüftungskanäle der belüfteten Bremsscheibe oder die Öffnung des vor diesen befindlichen Raumes zur Atmosphäre durch Adaptionsteile der Bremse, wie beispielsweise Bremsträger, Achsflansche etc. weitgehend überdeckt sein können. Hierdurch kann eine ausreichende Kühlluftzufuhr zu der Scheibenbremse, insbesondere zu den Kühlluftkanälen der Bremsscheibe behindert sein.

Ausgehend von einer Kühlluftführung gemäß den eingangs genannten Merkmalen liegt der Erfindung die Aufgabe zugrunde, mit einfachen Mitteln sicherzustellen, daß stets eine ausreichende Luftmenge zu den Eintrittsöffnungen der Kühlluftkanäle der Bremsscheibe gelangen und die Scheibenbremse somit ausreichend gekühlt werden kann.

Diese Aufgabe wird gemäß der Erfindung dadurch gelöst, daß der Tragansatz radiale Durchbrechungen aufweist, durch welche Kühlluft aus dem zwischen der Scheibenbremse und der Radschüssel radial außerhalb des Tragansatzes befindlichen, ersten Raum in den vom Tragansatz umschlossenen, zweiten Raum gelangen kann. Es wird somit ein zweiter Weg geöffnet, auf welchem Kühlluft von der Atmosphäre durch den ersten Raum zu den radial inneren Mündungen bzw. Eintrittsöffnungen der Kühlluftkanäle der Bremsscheibe stets und von Adaptionsteilen unbeeinflußt, ungedrosselt zuströmen kann. Zugleich ergibt sich hierbei eine Durchströmung des ersten, von der Scheibenbremse und der Radschüssel begrenzten Raumes, wodurch an diesen Raum angrenzende Teile der Scheibenbremse eine zusätzliche Kühlung erfahren.

Nach einem weiteren Merkmal der Erfindung kann es zweckmäßig sein, wenn die Durchbrechungen über den Um-

3

fang des Tragansatzes gleichmäßig verteilt etwa in der Mitte von dessen Längserstreckung angeordnet sind und im wesentlichen kreisartige Gestalt aufweisen. Hierdurch ergibt sich unter Berücksichtigung der Herstellung, der Kühlluftdurchströmung und der Festigkeit eine optimale Gestaltung der Bremsscheibe mit ihrem Tragansatz.

Weiterhin kann es nach einem Merkmal der Erfindung vorteilhaft sein, wenn die Radschüssel Durchbrechungen zur unmittelbaren Verbindung des ersten Raumes mit der das Fahrzeugrad umgebenden, freien Atmosphäre aufweist. Hierdurch wird eine weitere Verbesserung der Kühlluftzuströmung erzielt.

In der Zeichnung ist ein Ausführungsbeispiel einer nach der Erfindung ausgebildeten Kühlluftführung dargestellt, und zwar zeigt

Figur 1            einen Axialschnitt durch ein mit einer Scheibenbremse ausgestattetes Fahrzeugrad und

Figur 2            eine teilweise aufgeschnittene Bremsscheibe in vergrößertem Maßstab.

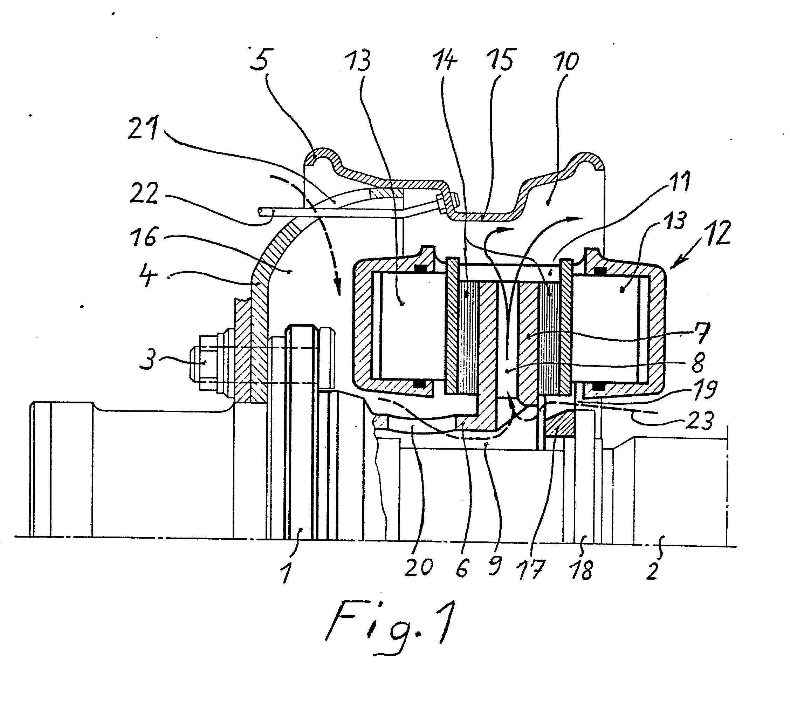

Gemäß Figur 1 ist mit einem Nabenbereich 1 einer Radachse 2 mittels Schrauben 3 eine Radschüssel 4 verschraubt, welche an ihrem Außenumfang eine Radfelge 5 für die Aufnahme eines nicht dargestellten Fahrzeugreifens trägt. Mit dem Nabenbereich 1 ist das freie Ende eines zylindrischen, rohrartigen Tragansatzes 6 verbunden, welcher mit radialem Abstand die Radachse 2 umgibt und an seinem anderen Ende in eine radial nach außen auskragende Bremsscheibe 7 übergeht. Die ring-

- 4 -

4

artige Bremsscheibe 7 ist von radial verlaufenden Kühlluftkanälen 8 durchsetzt, welche radial innen in einen
sich zwischen der Radachse 2 und dem Tragansatz 6 befindlichen Raum 9 und radial außen mit relativ weitem, radialen Abstand zur Radfelge 5 in einen über große Querschnitte mit der Außenluft in Verbindung stehenden Ringraum 10 münden. Die Bremsscheibe 7 ist von einem Bremssattel 11 der Scheibenbremse 12 übergriffen, in welchem
die schematisch als Kolbenglieder 13 dargestellten Zuspannorgane für die beiderseits der Bremsscheibe 7 angeordneten Bremsbeläge 14 gehaltert sind. Im Bereich
eines, bezogen auf die Bremsscheibe 2, zur Radscheibe 4
hin versetzt angeordneten Einschnürungsabschnittes 15
der Radfelge 5 geht der Ringraum 10 in einen Raum 16
über, welcher von der Radschüssel 4, den dieser zugewandten Wandungen der Scheibenbremse 12 sowie dem Außenumfang des Tragansatzes 6 begrenzt ist. Auf der dem
Tragansatz 6 abgewandten Seite der Bremsscheibe 7 ist
der Bremssattel 11 mittels eines Bremsträgers 17 an
einem Achsflansch 18 der Radachse 2 gehaltert. Diese
Halterung läßt nur einen relativ engen Druchströmungsquerschnitt 19 für die Kühlluft von der Atmosphäre zum
Raum 9 frei.

Insoweit entspricht das Kraftfahrzeugrad mit der Scheibenbremse 12 sowie der Kühlluftführung der Anordnung
nach der genannten DE-PS 1 580 144.

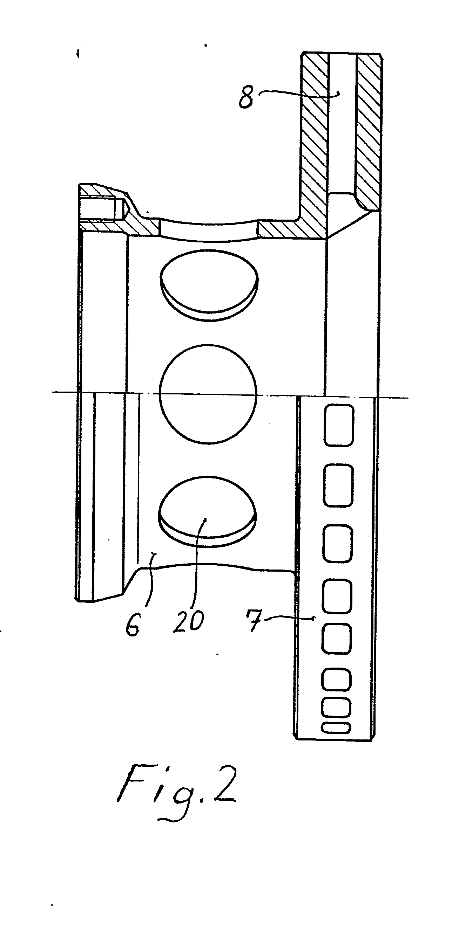

Der Tragansatz 6 der in Figur 2 als Einzelteil in
vergrößertem Maßstab teilweise aufgeschnitten dargestellten Bremsscheibe 7 weist etwa in der Mitte seiner
Längserstreckung über seinen Umfang verteilt eine
Reihe kreisförmiger Durchbrechungen 20 auf, durch welche
der Raum 16 über große Durchströmungsquerschnitte mit
dem Raum 9 verbunden ist. Weiterhin weist, wie aus Figur 1 ersichtlich, die Radschüssel 4 nahe ihres Überganges zur Radfelge 5 über den Umfang verteilt großquerschnittige Durchbrechungen 21 auf, deren eine gleichzeitig für den Durchtritt eines Füllrohres 22 für den
nicht dargestellten Fahrzeugreifen dienen kann.

Bei Rotation des Fahrzeugrades und der Bremsscheibe 7
fördern die umlaufenden Kühlluftkanäle 8 Kühlluft, welche entsprechend Pfeil 23 zum Teil in bisher üblicher
Weise von der Außenluft durch den Raum 9, die Kühlluftkanäle 8 zum Ringraum 10 und von dort zur Atmosphäre
strömt. Zugleich wird über große, keine Drosselung bewirkende Querschnitte Kühlluft von der Atmosphäre durch
die Durchbrechungen 21 in den Raum 16 angesaugt, welche
die der Radschüssel 4 zugewandten Flächen der Scheibenbremse 12 umströmt und dabei kühlt, sodann durch die
Durchbrechungen 20 aus dem Raum 16 zum Raum 9 und dann
mit der vorstehend erwähnten Kühlluftströmung durch die
Kühlluftkanäle 8 und den Ringraum 10 wieder zur Atmosphäre strömt. Durch die Durchbrechungen 20 und 21 sowie
die Kühlluftdurchströmung des Raumes 16 wird somit neben einer Kühlung der der Radschüssel 4 zugewandten Seite der Scheibenbremse 12 eine für die Kühlluftförderung
durch die Kühlluftkanäle 8 der Bremsscheibe 7 stets
ausreichende Kühlluftnachströmung in den Raum 9 bewirkt.
Die in Fig. 1 eingezeichneten Pfeile verdeutlichen die
Kühlluftströmugen.

Knorr-Bremse GmbH
Moosacher Str. 80
8000 München 40

München, 1.10.1980
TP - so
- 1634 -

## Bezugszeichenliste

1 Nabenbereich

2 Radachse

3 Schraube

4 Radschlüssel

5 Radfelge

6 Tragansatz

7 Bremsscheibe

8 Kühlluftkanal

9 Raum

10 Ringraum

11 Bremssattel

12 Scheibenbremse

13 Kolbenglied

14 Bremsbelag

15 Einschnürungsabschnitt

16 Raum

17 Bremsträger

18 Achsflansch

19 Durchstimmungsquerschnitt

20 Durchbohrung

21 Durchbohrung

22 Füllrohr

23 Pfeil

Knorr-Bremse GmbH
Moosacher Str. 80
8000 München 40

München, 1.10.1980
TP - fe

- 1634 -


P a t e n t a n s p r ü c h e


1. Kühlluftführung für eine radial innerhalb einer
Radfelge eines Kraftfahrzeugrades angeordnete Scheibenbremse, deren von radialen Kühlluftkanälen durchsetzte
Bremsscheibe am radial inneren Randbereich einseitig
einen auskragenden, im wesentlichen zylindrischen,
rohrartigen Tragansatz aufweist, dessen freies Ende
mit dem Fahrzeugrad zumindest nahe dessen Nabenbereich
verbunden ist, wobei sich zwischen der Scheibenbremse
und der Radschüssel radial außerhalb des Tragansatzes
ein mit der Außenluft kommunizierender, erster Raum
befindet und wobei die radial inneren Mündungen der
Kühlluftkanäle der Bremsscheibe mit einem vom Tragflansch umschlossenen, zweiten Raum kommunizieren,
dadurch gekennzeichnet, daß der Tragansatz (6) radiale
Durchbrechungen (20) aufweist, durch welche Kühlluft
aus dem zwischen der Scheibenbremse (12) und der Radschüssel (4) radial außerhalb des Tragansatzes (6) befindlichen, ersten Raum (16) in den vom Tragansatz (6)
umschlossenen, zweiten Raum (9) gelangen kann.

2. Kühlluftführung     nach Anspruch 1, dadurch gekennzeichnet, daß die Durchbrechungen (20) über den Umfang des Tragansatzes (6) gleichmäßig verteilt etwa
in der Mitte von dessen Längserstreckung angeordnet
sind und im wesentlichen kreisartige Gestalt aufweisen.

3. Kühlluftführung nach Anspruch 1 oder 2, dadurch gekennzeichnet, daß die Radschüssel (4) Durchbrechungen (21) zur unmittelbaren Verbindung des ersten Raumes (16) mit der das Fahrzeugrad umgebenden, freien Atmosphäre aufweist.

Fig.1

0049527

Fig.2

Europäisches
Patentamt

**EUROPÄISCHER RECHERCHENBERICHT**

Nummer der Anmeldung

EP 81 10 8027.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>AU - B - 426 529</u> (WESTINGHOUSE) <br> * Seite 5, Zeilen 15 bis 17; Fig. 1,2, Position 11a * <br><br>-- | 1,2 |
| | <u>DE - A1 - 2 557 331</u> (KLAUE) <br> Fig. 2, Positionen 11,14 * <br><br>-- | 1,3 |
| A | <u>DE - A - 2 128 594</u> (RENK) <br> * Anspruch 5 ; Fig., Position 10 * <br><br>-- | 1 |
| A | <u>DE - A - 1 939 532</u> (MESSIER) <br><br>-- | |
| D | <u>DE - C - 1 580 144</u> (KELSEY-HAYES) <br><br>---- | |

**KLASSIFIKATION DER ANMELDUNG (Int. Cl.3)**

F 16 D 65/847

**RECHERCHIERTE SACHGEBIETE (Int. Cl.3)**

F 16 D 65/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 12-01-1982 | LUDWIG |

EPA form 1503.1 06.78